# EUROPEAN PATENT APPLICATION

(11) **EP 4 742 551 A1**
(43) Date of publication of application: **13.05.2026**
(21) Application number: 24845831.7
(22) Date of filing: 26.06.2024
(51) Int. Cl.: H04B 7/06, H04W 24/08, G06N 20/00

(54) **DATA COLLECTION METHOD AND DEVICE FOR TRAINING BEAM PREDICTION MODEL IN WIRELESS COMMUNICATION SYSTEM**

(30) Priority: 21.07.2023 KR 20230095375
(71) Applicant: Samsung Electronics Co., Ltd., Suwon-si, Gyeonggi-do 16677 (KR)
(72) Inventor: LEE, Taeseop, Suwon-si, Gyeonggi-do 16677 (KR); KIM, Sangbum, Suwon-si, Gyeonggi-do 16677 (KR); BAE, Beomsik, Suwon-si, Gyeonggi-do 16677 (KR)
(74) Representative: Gulde & Partner
(86) International application number: PCT/KR2024/008844
(87) International publication number: WO 2025/023527

(57) **Abstract**

The present disclosure relates to a 5G or 6G communication system for supporting a higher data transmission rate. More specifically, a method performed by a terminal in a wireless communication system may comprise the steps of: receiving, from a base station, configuration information related to beam prediction-based beam management; on the basis of the configuration information, performing measurements related to the beam prediction-based beam management at a plurality of measurement time points, respectively; and transmitting, to the base station, a measurement report including results of the measurements performed at the plurality of measurement time points, respectively.

## Description

### [Technical Field]

The disclosure relates to a data collection method and device for training an artificial intelligence (AI) and machine learning (ML) model for predicting beam information between a base station and a terminal in a mobile communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, Al-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advancement of mobile communication systems as described above, it has become possible to provide various services, and accordingly, there is a need for a method for effectively providing such services.

### [Disclosure of Invention]

### [Technical Problem]

Based on the discussion as described above, the disclosure provides a device and a method capable of effectively providing services in a wireless communication system.

### [Solution to Problem]

In a method performed by a terminal in a wireless communication system, the method may include: receiving, from a base station, configuration information related to beam prediction-based beam management; based on the configuration information, performing measurements related to the beam prediction-based beam management at a plurality of measurement time points respectively; and transmitting, to the base station, a measurement report including results of the measurements performed at the plurality of measurement time points respectively.

In a method performed by a base station in a wireless communication system, the method may include: transmitting, to a terminal, configuration information related to beam prediction-based beam management; and based on the configuration information, receiving, from the terminal, a measurement report including results of measurements related to the beam prediction-based beam management, the measurements being performed at a plurality of measurement time points respectively.

In a terminal in a wireless communication system, the terminal may include a transceiver, and a controller connected to the transceiver, wherein the controller is configured to: receive, from a base station, configuration information related to beam prediction-based beam management; based on the configuration information, perform measurements related to the beam prediction-based beam management at a plurality of measurement time points respectively; and transmit, to the base station, a measurement report including results of the measurements performed at the plurality of measurement time points respectively.

In a base station in a wireless communication system, the base station may include a transceiver, and a controller connected to the transceiver, wherein the controller is configured to: transmit, to a terminal, configuration information related to beam prediction-based beam management; and based on the configuration information, receive, from the terminal, a measurement report including results of measurements related to the beam prediction-based beam management, the measurements being performed at a plurality of measurement time points respectively.

### [Advantageous Effects of Invention]

The disclosure provides a device and a method capable of effectively providing services in a wireless communication system.

### [Brief Description of Drawings]

FIG. 1 illustrates a structure of an NR system according to an embodiment of the disclosure.
FIG. 2 is a diagram illustrating a radio protocol structure in LTE and NR systems according to an embodiment of the disclosure.
FIG. 3 illustrates a beam management process between a base station and a UE in a wireless communication system according to an embodiment of the disclosure.
FIG. 4 illustrates a use case in which an AI/ML model is applied to beam information prediction and a process of training and deploying the AI/ML model in a wireless communication system according to an embodiment of the disclosure.
FIG. 5 is a flowchart illustrating a process in which, in order to train a model that predicts beam information in a time domain, a base station indicates a UE in an RRC_CONNECTED state to perform continuous beam measurements and receives result reporting, according to an embodiment of the disclosure.
FIG. 6 is a flowchart illustrating a process in which, in order to train a model that predicts beam information in a spatial domain, a base station indicates a UE in an RRC_CONNECTED state to perform measurement for all beams or a specific combination of beams and receives result reporting, according to an embodiment of the disclosure.
FIG. 7 is a flowchart illustrating a process in which, in order to train a model that predicts beam information in a spatial domain and/or a time domain, a base station indicates a UE to measure a beam in an RRC_IDLE/RRC_INACTIVE state and receives result reporting, according to an embodiment of the disclosure.
FIG. 8 is a flowchart illustrating a process in which, in order to train a model that predicts beam information in a time domain, a base station indicates a UE to perform continuous beam measurements after the UE has transitioned from an RRC_IDLE/RRC_INACTIVE state to an RRC_CONNECTED state, according to an embodiment of the disclosure.
FIG. 9 illustrates a UE device according to an embodiment of the disclosure.
FIG. 10 illustrates a base station device according to an embodiment of the disclosure.
FIG. 11 is a block diagram illustrating an example of a structure of a UE according to an embodiment of the disclosure.
FIG. 12 is a block diagram illustrating an example of a structure of a base station according to an embodiment of the disclosure.

### [Mode for the Invention]

Hereinafter, embodiments of the disclosure will be described in detail with reference to the accompanying drawings. In describing the disclosure, a detailed description of known functions or configurations incorporated herein will be omitted when it is determined that the description may make the subject matter of the disclosure unnecessarily unclear. Such an omission of unnecessary descriptions is intended to prevent obscuring of the main idea of the disclosure and more clearly transfer the main idea.

The terms which will be described below are terms defined in consideration of the functions in the disclosure, and may be different according to users, intentions of the users, or customs. Therefore, the definitions of the terms should be made based on the contents throughout the specification.

For the same reason, in the accompanying drawings, some elements may be exaggerated, omitted, or schematically illustrated. Also, the size of each element does not completely reflect the actual size thereof.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the disclosure, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In describing the disclosure below, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

In the following description of the disclosure, upper signaling refers to a signal transfer scheme from a base station to a terminal via a downlink data channel of a physical layer, or from a terminal to a base station via an uplink data channel of a physical layer. The upper signaling may also be understood as radio resource control (RRC) signaling or a media access control (MAC) control element (CE).

In the following description of the disclosure, terms and names defined in the 3rd generation partnership project new radio (3GPP NR) or 3GPP long term evolution (3GPP LTE) standards will be used for the sake of descriptive convenience. However, the disclosure is not limited by these terms and names, and may be applied in the same way to systems that conform other standards. In the disclosure, the term "gNB" may be interchangeably used with the term "eNB" for the sake of descriptive convenience. That is, a base station described as "eNB" may refer to "gNB". Furthermore, the term "terminal" may refer to not only a mobile phone, an MTC device, an NB-IoT device, and a sensor, but also other wireless communication devices.

In the following description, a base station is an entity that allocates resources to terminals, and may be at least one of a gNode B (gNB), an eNode B (eNB), a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, examples of the base station and the terminal are not limited to those mentioned above.

In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE, LTE-A, or 5G systems may be described by way of example, but the embodiments of the disclosure may also be applied to other communication systems having similar technical backgrounds or channel types. Examples of such communication systems may include the 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS, eNode B, or gNode B), and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5ms, and also requires a packet error rate of 10⁻⁵ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

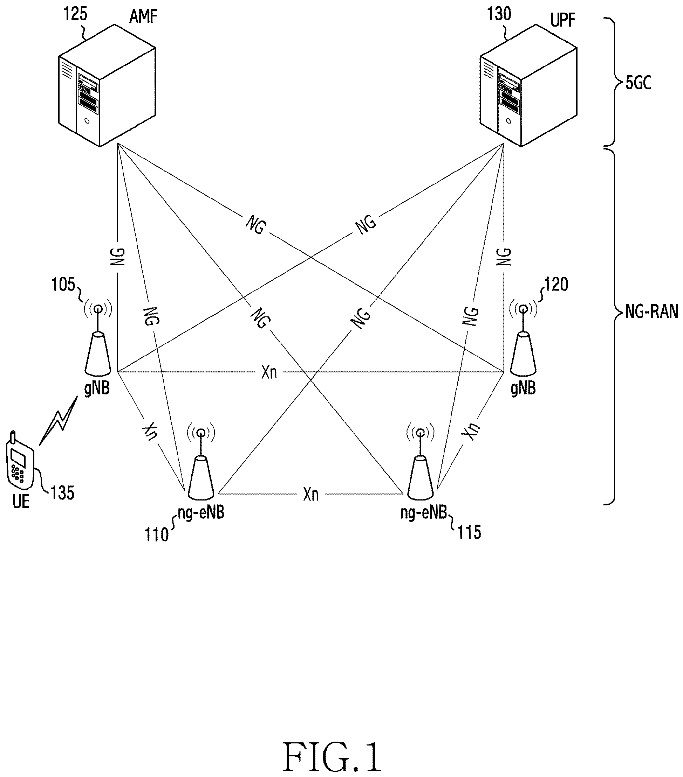

FIG. 1 illustrates a structure of an NR system according to an embodiment of the disclosure.

Referring to FIG. 1, a wireless communication system may include multiple base stations (e.g., a gNB 105, an ng-eNB 110, an ng-eNB 115, and a gNB 120), an access and mobility management function (AMF) 125, and a user plane function (UPF) 130. A user equipment (hereinafter UE or terminal) 135 may access an external network through the base stations (e.g., the gNB 105, the ng-eNB 110, the ng-eNB 115, and the gNB 120) and the UPF 130.

In FIG. 1, the base stations (e.g., the gNB 105, the ng-eNB 110, the ng-eNB 115, and the gNB 120) may provide radio access to UEs accessing the network as cellular network access nodes. That is, in order to service users' traffic, the base stations (e.g., the gNB 105, the ng-eNB 110, the ng-eNB 115, and the gNB 120) may collect state information of UEs, such as the buffer states, available transmission power states, and channel states, and perform scheduling accordingly, thereby supporting connections between the UEs and the core network (CN; in particular, CN in NR is referred to as "5GC"). A communication system may be divided into a user plane (UP) associated with actual user data transmission and a control plane (CP) such as connection management, and in the drawing, the gNB %n and gNB 105 may use UP and CP technology defined in the NR technology, and although connected to the 5GC, the ng-eNB 110 and ng-eNB 115 may use UP and CP technology defined in the LTE technology.

The AMF 125 is a device responsible for various control functions as well as a mobility management function for a UE and may be connected to multiple base stations, and the UPF 130 may refer to a type of gateway device for providing data transmission. Although not illustrate in FIG. 1, the NR wireless communication system may include a session management function (SMF). The SMF may manage a packet data network connection, such as a protocol data unit (PDU) session, provided to the UE.

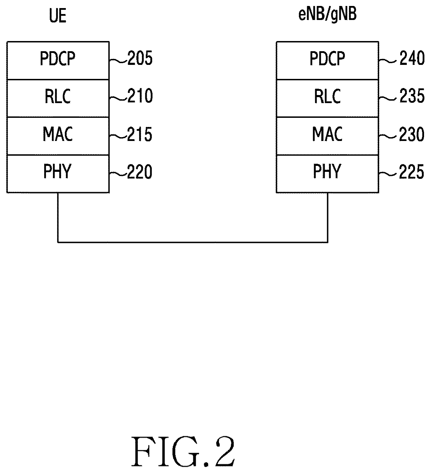

FIG. 2 illustrates a radio protocol structure in LTE and NR systems according to an embodiment of the disclosure.

Referring to FIG. 2, a radio protocol of an LTE system may include a packet data convergence protocol (PDCP) 205 or 240, a radio link control (RLC) 210 or 235, and a medium access control (MAC) 215 or 230 on each of UE and ENB sides. The packet data convergence protocol (PDCP) 205 or 240 is responsible for operations such as IP header compression/reconstruction, and the radio link control (hereinafter referred to as "RLC") 210 or 235 reconfigures a PDCP protocol data unit (PDU) into appropriate sizes. The MAC 215 or 230 is connected to several RLC layer devices configured in a single UE, and performs operations of multiplexing RLC PDUs into an MAC PDU and demultiplexing RLC PDUs from an MAC PDU. A physical (PHY) layer 220 or 225 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer. For additional error correction, the PHY layer also uses hybrid ARQ (HARQ), and a receiving end uses one bit to transmit whether a packet transmitted by a transmitting end is received. This is referred to as HARQ AQCK/NACK information. In the case of LTE, downlink HARQ ACK/NACK information in response to uplink data transmission may be transmitted via a physical ARQ indicator channel (PHICH), and in the case of NR, whether retransmission is required or new transmission has only to be performed may be determined through UE scheduling information via a physical dedicated control channel (PDCCH) that is a channel via which downlink/uplink resource allocation and the like are transmitted. This is because asynchronous HARQ is applied in NR. Uplink HARQ ACK/NACK information in response to downlink data transmission may be transmitted through a physical uplink control channel (PUCCH) or through a physical uplink shared channel (PUSCH). The PUCCH is generally transmitted in an uplink of a PCell as described below, but if supported by a UE, a base station may also additionally transmit the same to the corresponding UE in an SCell as described below, which is referred to as a PUCCH SCell.

Although not illustrated in the drawing, a radio resource control (RRC) layer may exist as a higher layer than each PDCP layer of the UE and the base station, and the RRC layer may exchange access/measurement-related configuration control messages for radio resource control.

The PHY layer may include one or multiple frequencies/carriers, and a technology for simultaneously configuring and using multiple frequencies is referred to as carrier aggregation (hereinafter CA). The CA refers to a technology in which, instead of using only one carrier for communication between a UE and an E-UTRAN node B (eNB), one primary carrier and multiple secondary carriers are additionally used and thus data capacity may be greatly increased as much as the number of secondary carriers. In the LTE and NR systems, a cell in a base station, which uses the primary carrier, may be referred to as a primary cell or PCell, and a cell in a base station, which uses the secondary carrier, may be referred to as a secondary cell or SCell.

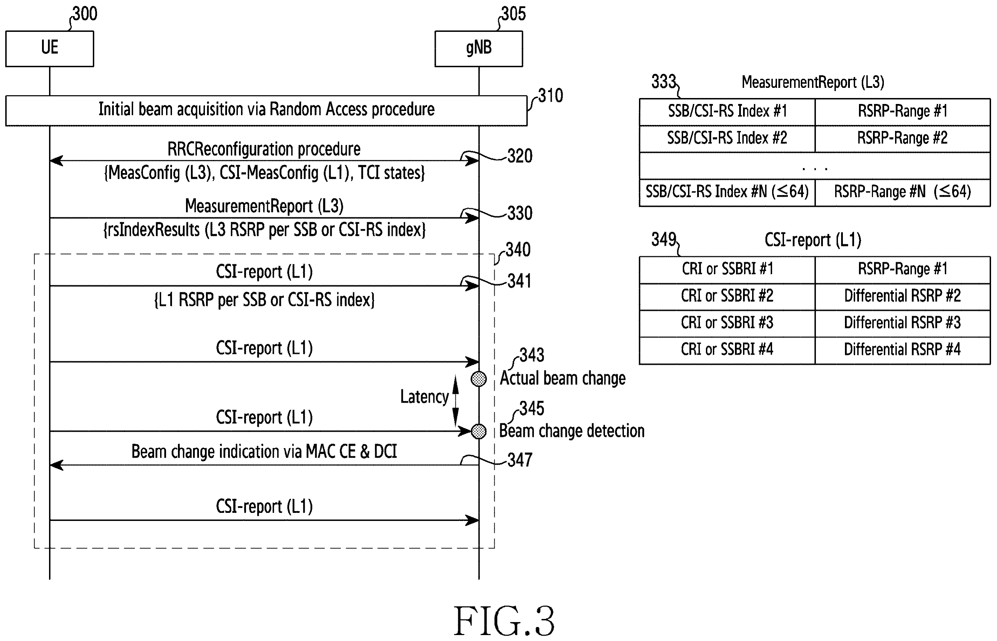

FIG. 3 illustrates a beam management process between a base station and a UE in a next-generation mobile communication system according to an embodiment of the disclosure.

Referring to FIG. 3, a base station 305 may indicate the UE 300 to perform Layer 1 (L1) and Layer 3 (L3) layer beam measurements in order to select (or manage) a beam to be used for DL and UL transmission with the UE 300, and may receive the result values thereof. The specific procedure of each operation is as follows.

In operation 310, the UE and the base station may obtain an initial Tx and Rx beam to be used for DL and UL transmission through a random access procedure.

In operation 320, the base station may indicate the UE to perform beam measurement and result reporting, through an RRCReconfiguration procedure, in order to appropriately change a beam to be used for DL and UL transmission, based on the movement of the UE and channel environment changes. In this case, the base station may indicate the UE to perform both beam measurement and reporting at the L1 layer together with beam measurement and reporting at the L3 layer. In addition, the base station may configure various transmission configuration indicator (TCI) state information used to indicate beam information to be used for DL and UL transmission for the UE. This TCI state information may be used in operation 143 below to indicate, to the UE, the beam information to be used for DL and UL transmission.

In operation 330, according to an indication from the base station in operation 320, the UE may perform signal measurements for a specific frequency, cell, or beam, and may transmit a MeasurementReport when a transmission condition for the L3 layer MeasurementReport is satisfied. In this case, when the UE has L3 beam measurement results for a specific cell, the results may be included, as illustrated by reference numeral 333, in the MeasurementReport (330). The L3 beam measurement result may include a list of SSB and CSI-RS indices transmitted using multiple beams, and at least one of an L3 reference signal received power (RSRP) measurement result, an L3 reference signal received quality (RSRQ) measurement result, or an L3 signal to interference plus noise ratio (SINR) measurement result corresponding to each index. In this case, the UE may include the measurement results for up to 64 SSB and CSI-RS indices.

In operation 340, the UE may measure a beam for a serving cell according to an indication from the base station in operation 320, and periodically report the result of measurement to the base station through a CSI report. Depending on the base station configuration described in operation 320, the UE may include, in a CSI-report 341 periodically transmitted, up to four SS/PBCH block resource indications (SSBRIs) or CSI reference signal resource indicators(CRIs) and corresponding L1 RSRP information, as indicated by reference numeral 349. In this case, the SSBRIs and CRIs included in the CSI report may be selected in descending order of beam quality.

In operation 343, an optimal beam to be used for DL and UL transmission with regard to the UE may be changed according to the movement of the UE or a change in a wireless channel environment.

In operation 345, the UE may report the measurement results for the changed optimal beam to the base station through a CSI report.

In operation 347, the base station may identify that an optimal beam for DL and UL transmission between the base station and the UE has been changed, based on the CSI-report transmitted by the UE in operation 145, and may provide DL and UL beam change indication to the UE. To this end, a MAC CE (e.g., a TCI state indication for UE-specific PDCCH MAC CE, or a TCI state activation/deactivation for UE-specific PDSCH MAC CE, etc.) and DCI (e.g., DCI format 1_1) may be used.

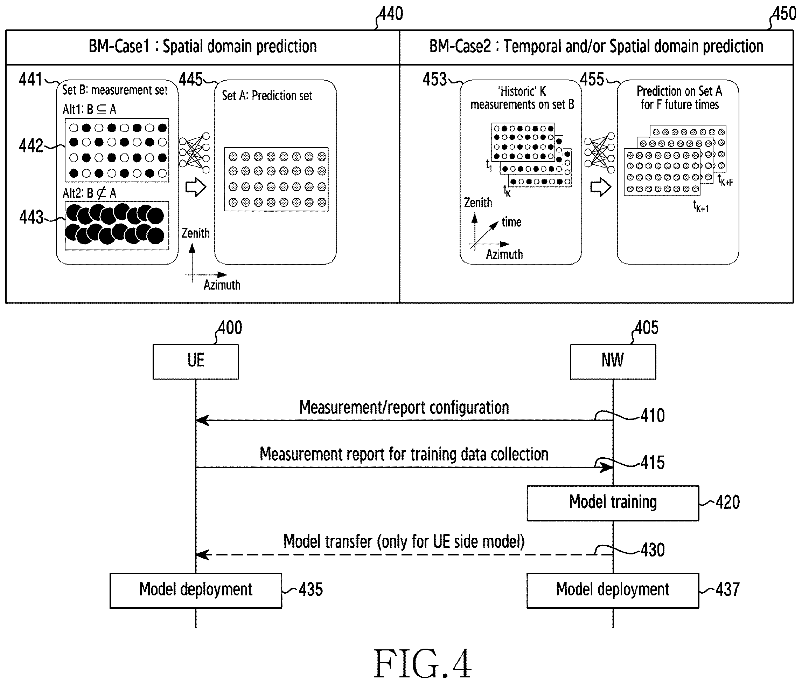

FIG. 4 illustrates a use case in which an AI/ML model is applied to beam information prediction and a process of training or deploying the AI/ML model in a next-generation mobile communication system according to an embodiment of the disclosure.

Referring to FIG. 4, an AI/ML model may be used to predict beam information in a spatial and temporal domain.

In a use case 440 for predicting beam information in a spatial domain, the AI/ML model may be trained to, when measurement information 441 (e.g., L1/L3 RSRP measurement results for some beams) for some beams is input, output a prediction result 445 (e.g., L1/L3 RSRP prediction results for all beams) for all beams requiring measurement. In this case, the measurement information 441 for some beams may include a subset 442 of the entire beam set to be predicted or another beam set 443 not belonging to the entire beam set to be predicted. In case that the AI/ML model for predicting the beam information in the spatial domain is deployed and used at the base station side, even if the UE does not include the measurement results for all beams in the beam measurement result report 333 included in the L3 measurementReport (330) in FIG. 3 and instead only includes the measurement results for some beams, the base station may predict the L1/L3 measurement results for the entire beam set by using the AI/ML model, thereby reducing the signaling load for beam measurement and result reporting. In addition, in case that the UE reports the measurement result 349 for a restricted beam set through the CSI report 341 in FIG. 3, the base station may use the AI/ML model to predict L1/L3 measurement results for the entire beam set and thereby determine the optimal beam for DL and UL transmission more accurately.

In a use case 450 for predicting beam information in a time domain, the AI/ML model may be trained to, when measurement information 453 (e.g., L1/L3 RSRP measurement results for some beams measured during a time period t_1 to t_k) for some beams obtained in the past is input, output a prediction result 455 (e.g., L1/L3 RSRP prediction results for all beams during a time period t_k+1 to t_k+F) for all beams in the future. In this case, the measurement information 453 for some beams obtained in the past may be a subset of the entire beam set to be predicted in the future or may be another beam set not belonging to the entire beam set to be predicted. In case that the AI/ML model for predicting beam information in the time domain is deployed and used at the base station side, the base station may more rapidly predict an optimal beam for a UE moving at high speed and thereby change a beam used for DL and UL transmission at an appropriate timing. More specifically, in FIG. 1C, the base station may periodically receive a CSI report from the UE, and may change a beam to be used for DL and UL transmission, based on beam information included in the CSI report. However, since the base station receives a CSI report according to a CSI-report reporting interval, a delay time (latency) (hereinafter, "beam change latency") may occur between an actual time point 443 at which the optimal beam is actually changed due to a change in the channel environment and an actual time point 445 at which the base station receives the CSI report from the UE and identifies the change in the optimal beam. In addition, when the UE is moving at high speed, such beam change latency may cause a beam management failure. A beam information prediction method according to an embodiment of the disclosure may prevent a beam management failure when a UE is moving at high speed by enabling a base station to use an AI/ML model for predicting beam information in a time domain, thereby allowing the base station to pre-predict an optimal beam change and change a beam to be used for DL and UL transmission at an appropriate timing.

In the disclosure, an embodiment in which a beam-prediction AI/ML model is used at a base station has been described merely as an example of a use case in which an AI/ML model is employed to predict beam information in the spatial and temporal domains. However, this is merely an example, and the beam-prediction AI/ML model may also be used at a UE. In this case, the UE may reduce a beam measurement load by performing measurement only for some beam combinations instead of all beam combinations during a beam measurement operation, and by predicting the measurement results for all beam combinations by using a beam prediction model in the spatial domain. In addition, the UE may utilize a time-domain beam prediction model to predict an optimal beam in advance and report the predicted result to the base station in advance, thereby helping the base station to switch a beam at an appropriate time.

The spatial/time-domain beam-prediction AI/ML model according to an embodiment of the disclosure may be trained in the network 405. To this end, the network may indicate the UE to measure and report data required for training the bean prediction AI/ML model, as in operation 410. Thereafter, in operation 415, the UE may perform beam measurement according to the network indication in operation 410 and may report the measurement result to the network. In operation 420, the network may perform training of a spatial/time-domain beam-prediction AI/ML model, based on the beam measurement result information collected from the UE in operation 415. According to an embodiment, the training of the model may be performed by a network entity other than a base station (gNB) (e.g., an operation, administration, and maintenance (OAM) server, a trace collection entity (TCE) server, etc.). When the model is trained by another network entity other than the base station, the base station may transfer, to the other network entity, the beam measurement result information collected from the UE in operation 415. In addition, the beam-prediction AI/ML model trained by another network entity may be transferred back to the base station. When it is desired to deploy the beam-prediction AI/ML model trained in operation 420 in the UE for use, the network may transmit the trained model to the UE in operation 430. Thereafter, the beam-prediction AI/ML model may be deployed and operated in the UE 435 or in the network 437.

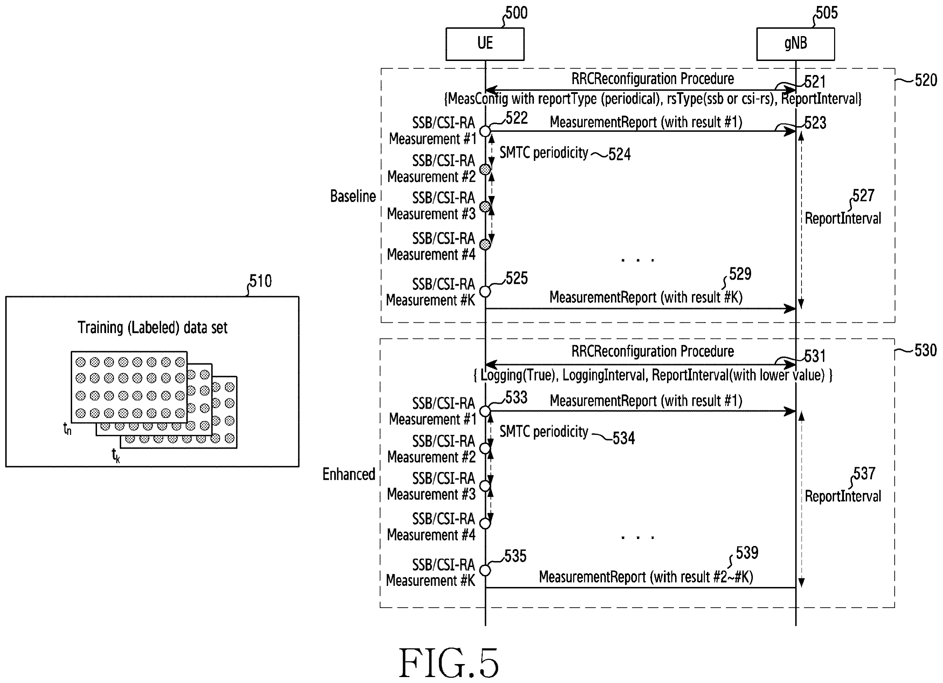

In FIG. 5, FIG. 6, FIG. 7, and FIG. 8, specific embodiments for a method and a procedure in which a network indicates a UE to perform beam measurement and reporting required for training of a beam-prediction AI/ML model, and receives the result reporting are described.

FIG. 5 is a flowchart illustrating a process in which, in order to train a model that predicts beam information in a time domain, a base station indicates a UE in an RRC_CONNECTED state to perform continuous beam measurements and receives result reporting, according to an embodiment of the disclosure.

Referring to FIG. 5, the base station may train a model that predicts beam information in the time domain, based on continuous measurement information for all beams (e.g., measurement results for each of all beams at times t_n, t_n+1, t_n+2, ..., t_k) (indicated by reference numeral 510). In other words, in order to train the model for predicting beam information in the time domain, the base station may require the continuous measurement information for all beams 510 in the time domain.

To this end, the base station may indicate a UE in an RRC_CONNECTED state, through RRC signaling, to report L1 or L3 beam measurement results (more specifically, L1 or L3 RSRP/RSRQ/SINR values calculated by measuring an SSB and a CSI-RS transmitted through different beams). A basic (general or conventional) operation flow 520 between the base station and the UE for this is as follows.

In operation 521, the base station may indicate the UE, through an RRCReconfiguration procedure, to perform measurement and result reporting with regard to a specific frequency, cell, and beams. More specifically, the base station may provide, to the UE through an RRCReconfiguration message, an indication of a frequency, a cell, and beams for measurement (i.e., an SSB or CSI-RS transmitted using a specific beam). In addition, in order to indicate when the UE can measure the SSB or CSI-RS transmitted using the specific beam, the base station may include measurement timing configuration information (SMTC: SSB Measurement Timing Configuration) in the RRCReconfiguration message. Furthermore, the base station may indicate, through the RRCReconfiguration message, information related to measurement result reporting, such as a report type (reportType: periodical or eventTriggered) and a reference signal type (rsType: SSB or CSI-RS) for which measurement results are to be reported. At this time, values such as a report interval (ReportInterval) and a report amount (reportAmount) may also be configured together.

In operation 522, the UE may measure an SSB and a CSI-RS at each SMTC period 524 (which may be configured as 5 ms, 10 ms, 20 ms, 40 ms, 80 ms, or 160 ms) according to the beam-measurement and result-reporting configuration provided by the base station in operation 521. When the result-report type is configured as "periodical", the UE may perform the first measurement and, at a time point at which reporting of the result value becomes possible, may include the corresponding measurement result in a MeasurementReport (523) and report it to the base station. Thereafter, the UE may periodically transmit a MeasurementReport at a ReportInterval 527 (e.g., which may be configured as 120ms, 240ms, 480ms, 640ms, 1024ms, 2048ms, 5120ms, 10240ms, 20480ms, 40960ms, 1 min, 6 min, 12 min, or 30 min) configured by the base station in operation 521. When transmitting the MeasurementReport (529), the UE may include, in the MeasurementReport, the most recently measured SSB and CSI-RS measurement result 525 and report the same to the base station. On the other hand, when the result-report type is configured as "eventTriggered", the UE may measure the SSB and CSI-RS at each SMTC period and determine whether a configured event occurrence condition is satisfied. When the event occurrence condition is satisfied, transmission of a MeasurementReport message may be initiated.

As in a basic operation flow embodiment 520, when a ReportingInterval 527 is configured to have a value greater than a SMTC period 524, only a part of the measurement result information (SSB/CSI-RA Measurement #1 and SSB/CSI-RA Measurement #K) actually measured by the UE at each SMTC period in the time domain may be reported to the base station. However, the base station may train a time-domain beam prediction model, based on continuous beam measurement information for all beams actually measured by the UE at each SMTC period. Accordingly, in order for the base station to receive, from the UE, continuous beam measurement information required for training the time-domain beam prediction model, the basic beam measurement and reporting operation flow 520 may be enhanced as the operation flow 530. In other words, the base station according to an embodiment of the disclosure may receive, from the UE, consecutive beam measurement information required for training the time-domain beam prediction model, based on the operation flow 530.

In operation 531, the base station may indicate the UE, through an RRCReconfiguration procedure, to perform measurement and result reporting with regard to a specific frequency, cell, and beams. The specific configuration information transferred to the UE by the base station through the RRCReconfiguration message may include at least a part of, for example, a frequency, a cell, and beams for measurement (that is, an SSB or CSI-RS transmitted using a specific beam), measurement time configuration information, a report type, a reference signal type, a report interval, or a number of reports, as described in operation 521. In addition, in order for the base station to receive, from the UE, continuous beam-measurement information required for training the time-domain beam prediction model, at least a part of the following information may be additionally included in the RRCReconfiguration message.
- **ReportInterval (with a lower value):** A newly defined ReportInterval value that is equal to or smaller than an SMTC period 534 may be provided so that the UE is able to report, to the base station, all result values obtained by performing SSB or CSI-RS measurements at each SMTC period 534. For example, values that can be currently configured as an SMTC period (5 ms, 10 ms, 20 ms, 40 ms, 80 ms, 160 ms) may be newly included in the configurable ReportInterval values. To this end, a new ReportInterval field and IE may be defined. However, in this case, the UE may send an L3 MeasurementReport message more frequently, and the quality of other user data transmission may be degraded. To avoid this problem, the base station may configure the UE to store (log) result values measured in an SMTC period, and report multiple measurement results included together in an L3 measurementReport. To this end, a logging indicator may be introduced.

**Logging indicator:** A new indicator (for example, logging) may be defined to cause the UE to log all measurement results (e.g., SSB/CSI-RA Measurement #2, SSB/CSI-RA Measurement #3, ..., SSB/CSI-RA Measurement #k) obtained between measurement reports (MeasurementReports 533 and 539) so that, when performing SSB or CSI-RS measurements at each SMTC period 534 and obtaining the result values, the UE may report, to the base station, all of the logged measurement results together at the time of measurement report 539. In case that the base station configures the value of the corresponding indicator (Logging) to "True", the UE may log all measurement results obtained at each SMTC period 534, and then may report all of the logged measurement results to the base station when a MeasurementReport is transmitted at each ReportInterval 537. After the UE reports the logged measurement results to the base station, the UE may delete the result values that have already been reported from its memory, and may newly log subsequent measurement results.

**LoggingInterval:** When the logging indicator is configured, the base station may configure a separate loggingInterval. When the logginglnterval is configured, the UE may log the most recent measurement result value at each loggingInterval. If the LoggingInterval value is not configured, the UE may perform logging at each SMTC period 534.

**L1 measurement indication:** When the base station needs to report L1 measurement results (e.g., L1 RSRP/RSRQ/SINR) instead of L3 measurement results that are filtered in the time domain, for training the beam prediction model, the base station may include, in the RRCReconfiguration message, a 1-bit indicator for indicating the UE to report L1 measurement results. If the base station indicates L1 measurement result reporting through the 1-bit indicator, the UE may include the L1 measurement results, rather than L3 measurement results, in the L3 MeasurementReport in operation 539 below (alternatively, the UE may additionally include the L3 measurement results together with the L1 measurement results).

In operation 539, the UE may report to the base station, a MeasurementReport that includes a plurality of measurement result values that have been logged. In this case, each measurement result may include an L1 or L3 RSRP/RSRQ/SINR value calculated by measuring an SSB or CSI-RS transmitted through each beam at a specific time point. More specifically, each measurement result may include a list of SSB and CSI-RS indexes measured at a specific time point, and the L1 or L3 RSRP/RSRQ/SINR measurement results corresponding to the respective indexes. When the plurality of measurement result values logged at various time points are included in a MeasurementReport, the UE may, in order to reduce signaling load, report, for each index, only a difference (a difference in value) between a result value logged at an immediately preceding time point and a result value logged at a next time point, instead of reporting an absolute value of the L1 or L3 RSRP/RSRQ/SINR measurement values corresponding to each index. Alternatively, instead of reporting the absolute value of the L1 or L3 RSRP/RSRQ/SINR measurement values corresponding to each SSB/CSI-RS index, the UE may divide the representable range of values into several sections, define the sections and their corresponding index values in a table format, and report only the index corresponding to the RSRP/RSRQ/SINR measurement value, thereby reducing signaling load. In addition, when the plurality of measurement result values logged at various time points are included in a MeasurementReport, the UE may further include, for each measurement result, time information indicating the time point at which the corresponding result value was logged (that is, the time point at which the measurement was performed). Further, the UE may report the following auxiliary information to the base station to assist with training a beam prediction model. A request for reporting such auxiliary information may be made through an RRCReconfiguration procedure in operation 531.
- Tx and/or Rx beam shape information: Tx/Rx beam pattern information, Tx/Rx beam boresight direction (azimuth and elevation), 3 dB beamwidth, and the like.
- UE position information: User position information
- UE direction/orientation information: User direction/orientation information
- Tx beam usage information: Tx beam usage information

In relation to the enhanced operation flow 530 according to an embodiment of the disclosure, a UE capability information parameter may be newly defined. The new UE capability information parameter may indicate whether the UE is able to understand the new configuration information (e.g., ReportInterval (with lower value), logging indicator, and L1 measurement indication) included in operation 531 and perform operations indicated according to the configuration. A separate UE capability information parameter may be defined for each of the configuration information and the corresponding operations, or a UE capability information parameter may be defined for each combination of one or more configurations and operations. The process in which the base station and the UE exchange UE capability information may precede the above signaling procedure.

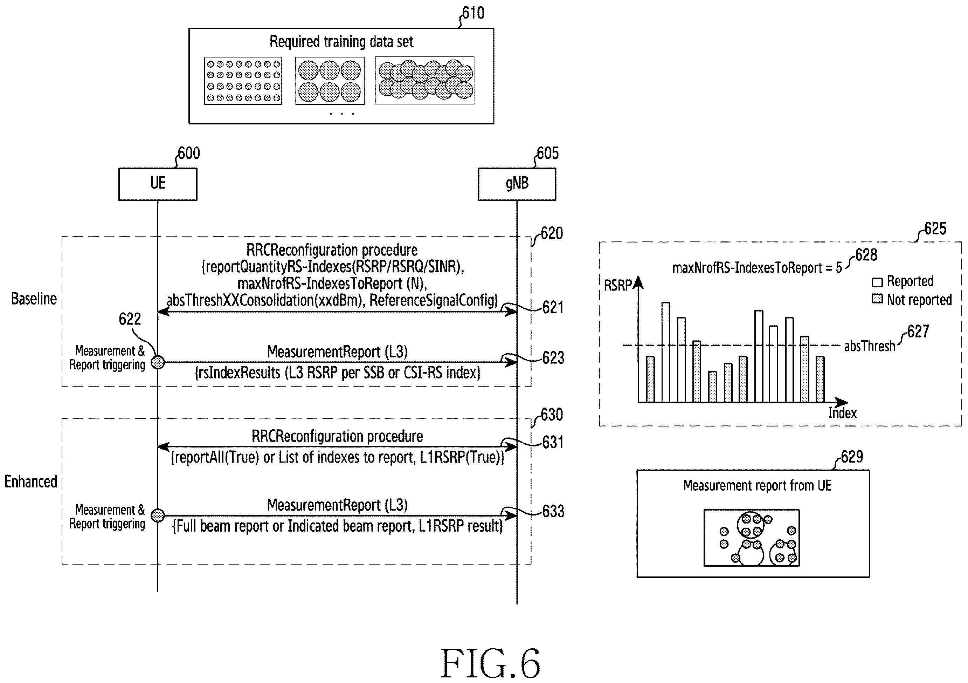

FIG. 6 is a flowchart illustrating a process in which, in order to train a model that predicts beam information in a spatial domain, a base station indicates a UE in an RRC_CONNECTED state to perform measurement for all beams or a specific combination of beams and receives result reporting, according to an embodiment of the disclosure.

Referring to FIG. 6, the base station may train a model that predicts beam information in the spatial domain, based on measurement information for all beams obtained at a specific time (e.g., measurement results for all DL transmission beams operated by the base station) (indicated by reference numeral 610). In other words, in order to train a model for predicting beam information in the spatial domain, the base station may require the measurement information for all beams 610 obtained at a specific time.

To this end, the base station may indicate a UE in the RRC_CONNECTED state, through RRC signaling, to report L1 or L3 beam measurement results (more specifically, L1 or L3 RSRP/RSRQ/SINR values calculated by measuring an SSB or CSI-RS transmitted through a specific beam). A basic operation flow 620 between the base station and the UE for this may be described as follows.

In operation 621, the base station may indicate the UE, through an RRCReconfiguration procedure, to perform measurement and result reporting with regard to a specific frequency, cell, and beams. More specifically, the base station may provide, to the UE through an RRCReconfiguration message, an indication of a frequency, a cell, and beams for measurement (that is, SSBs or CSI-RSs transmitted using specific beams). Detailed configuration information included in the RRCReconfiguration message may be as follows.
- **ReferenceSignalConfig:** Information on DL reference signals for beam measurement (i.e., SSBs and CSI-RSs transmitted using specific beams). The base station may indicate DL reference signals that the UE is to measure for beam measurement by including the ReferenceSignalConfig information in the RRCReconfiguration message.
- **reportQuantityRS-Indexes:** Information indicating which values the UE should report for each reference signal (RS) index transmitted using specific beams when reporting beam measurement results. Through the reportQuantityRS-Indexes value, the base station may indicate the UE to report RSRP, RSRQ, and/or SINR.
- **maxNrofRS-IndexesToReport:** Information indicating the maximum number of RS indexes for which the UE may report results for each RS type (SSB or CSI-RS) when reporting beam measurement results.
- **absThreshSS-BlocksConsolidation/absThreshCSI-RS-Consolidation:** Information for indicating the UE to include, in its beam measurement result reporting, only the results of beams whose sorting quantity (one of RSRP, RSRQ, or SINR) has a value equal to or greater than the absThreshSS-BlocksConsolidation value or the absThreshCSI-RS-Consolidation value, depending on the RS type (SSB or CSI-RS). For reference, the absThreshSS-BlocksConsolidation and absThreshCSI-RS-Consolidation values may be configured in units of dBm. The sorting quantity may be the value indicated by reportQuantityRS-Indexes when only one of RSRP, RSRQ, or SINR is indicated. When multiple values are indicated in reportQuantityRS-Indexes, RSRP, RSRQ, and SINR may be given priority in this order and the sorting quantity may be configured accordingly.

To additionally indicate the UE on the timing at which the SSB or CSI-RS transmitted through a specific beam should be measured, the base station may include measurement-time configuration information (SMTC, SSB Measurement Timing Configuration) in the RRCReconfiguration message. In addition, through the RRCReconfiguration message, the base station may indicate, in relation to reporting the measurement results, the report type (reportType: periodical or eventTriggered) and the reference-signal type (rsType: SSB or CSI-RS) whose measurement results should be reported. At this time, values such as a report interval (ReportInterval) and a report amount (reportAmount) may additionally be configured.

In operation 622, the UE may measure the SSB and CSI-RS according to the beam-measurement and result-reporting configuration provided in operation 621 by the base station. More specifically, the UE may measure the values indicated by reportQuantityRS-Indexes (RSRP, RSRQ, SINR) for the RSs included in the ReferenceSignalConfig configured in operation 621 by the base station. When the result-report type is configured as "periodical", the UE may perform the first measurement and may report the result to the base station by including it in a MeasurementReport (623). On the other hand, when the result-report type is configured as "eventTriggered", the UE may measure the SSB and CSI-RS at each SMTC period and may determine whether the configured event-occurrence condition is satisfied. If the event-occurrence condition is satisfied, the UE may initiate transmission of the MeasurementReport message (623).

In operation 623, the UE may include, in a MeasurementReport, the beam-measurement results obtained according to the base station configuration described in operation 621 and report the same to the base station. Among the beam-measurement result values measured in operation 622, the UE may include, for each RS type (SSB and CSI-RS), the index of the best beam (that is, the index of the RS transmitted through the best beam) in the MeasurementReport (123). Additionally, when the base station has configured a maxNrofRS-IndexesToReport value and absThreshSS-BlocksConsolidation/absThreshCSI-RS-Consolidation values in operation 621, the UE may include additional beam-measurement results in the MeasurementReport (623). In this case, for each RS type (SSB and CSI-RS), the UE may include, in the MeasurementReport (623), beam-measurement results for up to maxNrofRS-IndexesToReport 628. Among the beams measured in operation 622, only the result values of the beams whose sorting-quantity values are equal to or greater than absThreshSS-BlocksConsolidation or absThreshCSI-RS-Consolidation 627 may be included, in descending order of the sorting-quantity values.

As in the basic operation-flow embodiment 620, when the base station indicates the UE to perform beam measurement and receives the result values reported by the UE, only the beam-measurement results 629 that satisfy the conditions configured by the base station may be reported to the base station among the entire set of beam results actually measured by the UE in the spatial domain. However, the base station may train a spatial-domain beam-prediction model, based on the measurement information for all beams actually measured by the UE at the specific time. Therefore, in order for the base station to receive, from the UE, the measurement information for all beams required for spatial-domain beam-prediction model training, the basic beam-measurement and reporting flow 620 may be enhanced as shown in an operation flow 630. In other words, the base station according to an embodiment of the disclosure may receive, from the UE, the measurement information for all beams required for training a spatial-domain beam-prediction model based on the operation flow 630.

In operation 631, the base station may indicate the UE, through an RRCReconfiguration procedure, to perform measurement and result reporting with regard to a specific frequency, cell, and beams. At this time, the detailed configuration information that the base station delivers to the UE through the RRCReconfiguration message is as described in operation 621. In addition, in order for the base station to receive from the UE the continuous beam-measurement information required for training a time-domain beam prediction model, at least some of the following information may additionally be included in the RRCReconfiguration message:
- **reportAll indicator:** The base station may indicate the UE to always report the measurement results for all DL RSs included in the ReferenceSignalConfig, regardless of whether maxNrofRS-IndexesToReport and absThreshSS-BlocksConsolidation / absThreshCSI-RS-Consolidation are configured. To this end, a new indicator (e.g., reportAll) may be introduced. When the reportAll indicator in the RRCReconfiguration message (631) received from the base station is configured as "True", the UE may perform measurement for all DL RSs included in the ReferenceSignalConfig, regardless of whether maxNrofRS-IndexesToReport and absThreshSS-BlocksConsolidation/absThreshCSI-RS-Consolidation are configured, and may include the resulting measurement values in the MeasurementReport (633).
- **indexesToReportList:** The base station may indicate the UE to report measurement results for a part of the DL RSs included in the ReferenceSignalConfig, regardless of whether maxNrofRS-IndexesToReport and absThreshSS-BlocksConsolidation / absThreshCSI-RS-Consolidation are configured. To this end, a new field (e.g., indexesToReportList) may be introduced. When indexesToReportList is configured in the RRCReconfiguration message (131) received from the base station, the UE may include, in the MeasurementReport (633), the measurement results for all DL RSs indicated through indexesToReportList, regardless of whether maxNrofRS-IndexesToReport and absThreshSS-BlocksConsolidation / absThreshCSI-RS-Consolidation are configured, and may report the MeasurementReport to the base station.
- **L1 measurement indication:** When the base station needs to report L1 measurement results (e.g., L1 RSRP/RSRQ/SINR), rather than L3 measurement results filtered in the time-domain, for training a beam prediction model, the base station may include, in the RRCReconfiguration message, a 1-bit indicator for indicating the UE to report the L1 measurement results. If the base station indicates L1 measurement-result reporting through the 1-bit indicator, the UE may include the L1 measurement results, rather than the L3 measurement results, in the L3 MeasurementReport in operation 633, or may additionally include the L1 measurement results together with the L3 measurement results.

In operation 633, the UE may include multiple beam-measurement result values in the MeasurementReport and report them to the base station, according to the base station configuration described in operation 631. In this case, each measurement result may include an L1 or L3 RSRP/RSRQ/SINR value calculated by measuring an SSB or CSI-RS transmitted through each beam at a specific time point. More specifically, each measurement result may include a list of SSB and CSI-RS indexes measured at a specific time point, and L1 or L3 RSRP/RSRQ/SINR measurement results corresponding to each index. When multiple beam-measurement result values are included in the MeasurementReport, the UE may, in order to reduce the signaling load, report only a difference (difference in value) between the measurement value for a reference index and a measurement value for each index, instead of reporting an absolute value of the L1 or L3 RSRP/RSRQ/SINR measurement values for each index. Alternatively, instead of reporting the absolute value of the L1 or L3 RSRP/RSRQ/SINR measurement values corresponding to each SSB/CSI-RS index, the UE may divide the representable range of values into several sections, define the sections and corresponding index values in a table format, and report only the index corresponding to the RSRP/RSRQ/SINR measurement values, thereby reducing the signaling load.

In relation to the enhanced operation flow 630 according to an embodiment of the disclosure, a new UE capability information parameter may be defined. The new capability information parameter may indicate whether the UE is able to understand the new configuration information included in operation 631 (e.g., reportAll indicator, indexesToReportList, L1 measurement indication) and perform operations indicated according to the configuration. A separate UE capability information parameter may be defined for each of the configuration information and the corresponding operations, or a UE capability information parameter may be defined for each combination of one or more configurations and operations. The process in which the base station and the UE exchange UE capability information may precede the above signaling procedure.

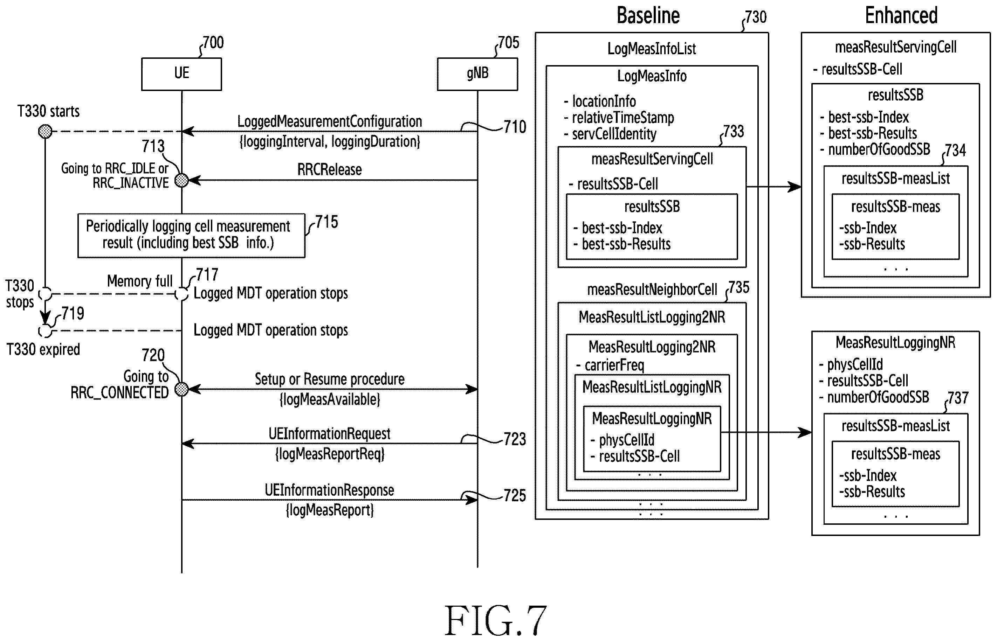

FIG. 7 is a flowchart illustrating a process in which, in order to train a model that predicts beam information in a spatial domain and/or a time domain, a base station indicates a UE to measure a beam in an RRC_IDLE/RRC_INACTIVE state and receives result reporting, according to an embodiment of the disclosure.

Referring to FIG. 7, the base station may configure a UE in an RRC_CONNECTED state to perform cell and beam measurements and to log the result values when the UE transitions to the RRC_IDLE and RRC_INACTIVE states (operation 710). After transitioning to the RRC_IDLE or RRC_INACTIVE state, the UE may perform the cell and beam measurements and log the result values according to the base station configuration. Thereafter, when the UE transitions to the RRC_CONNECTED state, the base station may request the UE to report the measurement results that were logged while the UE was in the RRC_IDLE or RRC _INACTIVE state, and the UE may report the cell and beam measurement results to the base station according to the request of the base station. The specific signaling procedures and operations between the base station and the UE for the operation are as follows.

In operation 710, the base station may transmit a LoggedMeasurementConfiguration message (710) to the UE so as to indicate the UE to perform a measurement for a cell and a beam and to log the result value when the UE transitions to an RRC_IDLE or RRC_INACTIVE state later. In this case, the LoggedMeasurementConfiguration message may include at least some of the following information.
- **LoggingDuration:** This indicates a duration during which configuration information of the LoggedMeasurementConfiguration message remains valid. The UE may start the T330 timer at the time of receiving the LoggedMeasurementConfiguration message from the base station and may configure the timer value as the LoggingDuration value. Thereafter, as in operation 719, if the T330 timer is expired, the UE may release all configuration information of the LoggedMeasurementConfiguration message. In addition, after a predetermined time (e.g., 24 hours) has elapsed from a time point at which the T330 timer expires, the UE may delete the logged measurement results.
- **loggingInterval:** This indicates a time interval at which the UE performs measurement on a cell or beam in an RRC_IDLE or RRC_INACTIVE mode and periodically logs the result value. When the UE receives a LoggedMeasurementConfiguration message from the base station, the UE may perform a logging operation at an interval (or period) indicated by the loggingInterval value included in the message.
- **areaConfiguration:** This indicates the range of an area in which the UE performs cell or beam measurements in the RRC_IDLE or RRC_INACTIVE mode. The base station may indicate the range of the area in which the UE is to perform measurements (i.e., the areaConfiguration) in the form of a list of CellGlobalIDs, a list of TrackingAreaCodes, or a list of TrackingAreaIdentities. In addition, by including InterFreqTargetList information in the areaConfiguration information, the base station may indicate neighboring frequencies and cells on which the UE is to perform measurements within the area in which the UE is to perform measurements.
- **plmn-IdentityList:** This indicates public land mobile networks (PLMNs) for which the UE performs cell or beam measurements in the RRC_IDLE or RRC_INACTIVE mode. By including a plmn-IdentityList in the LoggedMeasurementConfiguration message, the base station may indicate the UE to perform measurement and logging only for the indicated PLMNs. In other words, the base station may indicate the UE to perform measurement and logging only when the current registered public land mobile network (RPLMN) of the UE is included in the plmn-IdentityList.

**absoluteTimeInfo:** This indicates the absolute time value of the cell at a time point at which the base station transmits the LoggedMeasurementConfiguration message.

In operation 713, the base station may transmit an RRCRelease message to the UE so as to transition the UE from the RRC_CONNECTED state to the RRC_IDLE or RRC_INACTIVE state. In this case, the UE may start a measurement and logging operation according to the base station configuration described in operation 710 while transitioning to the RRC_IDLE or RRC_INACTIVE state.

In operation 715, the UE may perform measurement and logging operations at the loggingInterval based on the configuration provided by the base station in operation 710. More specifically, in a cell selection state (that is, in a state in which the UE is searching for a cell to camp on), the UE may perform logging at every loggingInterval. In addition, in a camped normally state (i.e., a state in which the UE is camped on the NR cell), the UE may perform logging when the current RPLMN of the UE is included in a preconfigured plmn-IdentityList. However, in case that the areaConfiguration is configured together with the LoggedMeasurementConfiguration described in operation 710, the UE may perform logging only when the current cell belongs to the area configured by the areaConfiguration.

When the memory of the UE becomes full while the UE performs measurement and logging operations in the RRC_IDLE or RRC_INACTIVE state as in operation 717, the UE may stop the T330 timer and release all configuration information of the LoggedMeasurementConfiguration message. In addition, the UE may delete the logged measurement results after a predetermined time (for example, 24 hours) has elapsed from a time at which the T330 timer is stopped.

In a case where the T330 timer is expired, as in operation 719, the UE may release all configuration information of the LoggedMeasurementConfiguration message. In addition, a predetermined time (for example, 24 hours) after the T330 timer has expired, the UE may delete the measurement results that have been logged.

In operation 720, the UE may transition back to the RRC_CONNECTED state through an RRC setup or RRC resume procedure. In this case, the UE may stop a measurement and logging operation that is being performed in the RRC_IDLE or RRC_INACTIVE state according to the LoggedMeasurementConfiguration configured in operation 710. In addition, the UE may report to the base station that it has obtained the results of measurement and logging performed in the RRC_IDLE or RRC_INACTIVE state by including a logMeasAvailable indicator in the RRCSetupComplete and RRCResumeComplete messages in the RRC Setup and RRC Resume procedures, respectively. Furthermore, the UE may report to the base station that it has the results of measurement and logging performed in the RRC_IDLE or RRC_INACTIVE state by including the logMeasAvailable indicator in the RRCReconfigurationComplete and RRCReestablishmentComplete messages in the RRC reconfiguration and RRC reestablishment procedures, respectively.

In operation 723, the base station may indicate the UE to report the logged measurement results by including a logMeasReportReq indicator in the UEInformationRequest message transmitted to the UE.

In operation 725, according to the indication of the base station provided in operation 123, the UE may transmit the logged measurement results (i.e., the results of measurement and logging performed in the RRC_IDLE or RRC_INACTIVE state in operation 715) to the base station by including them in the form of logMeasReport information in a UEInformationResponse message. The logMeasReport may include a LogMeasInfoList 730 including multiple LogMeasInfos logged at various timepoints. Each LogMeasInfo may include logging results for a serving cell (indicated by reference numeral 733, measResultServingCell) and logging results for a neighboring cell (indicated by reference numeral 735, measResultNeighborCell). The logging results for the serving cell may, with respect to a cell, include a cell-measurement result based on multiple SSB measurements, and, with respect to beams, may include a best SSB index (in other words, index information (best-ssb-Index) of the SSB transmitted through the best beam having the highest signal strength) and measurement results associated therewith (in other words, L3 RSRP, RSRQ, and SINR values obtained by measuring the corresponding SSB). The logging results for a neighboring cell may include a cell-measurement result based on multiple SSB measurements with respect to a cell, and may not include beam-related information.

As described above, a basic (general or conventional) LogMeasInfo 730 may include, with respect to beams, only one measurement result corresponding to the best SSB index for the serving cell, and may not include any beam-related information for neighboring cells. Accordingly, conventional measurement and logging operations in the RRC_IDLE and RRC_INACTIVE states may not be suitable for collecting data used for training a beam-prediction model in a time domain or spatial domain. For reference, in order for the base station to train a beam prediction model in a time domain and/or a space domain, the base station may require continuous measurement results for all beams in a time domain and a spatial domain as in FIG. 5 and FIG. 6. In addition, the base station may collect beam-related measurement information by indicating a UE in an RRC_IDLE or RRC_INACTIVE state to perform beam measurement and logging in order to obtain data used for training the beam prediction model from predetermined UEs in various states. To this end, among the operations described above for indicating the UE to perform beam measurement in the RRC_IDLE/RRC_INACTIVE state and receiving result reporting, the operations in operation 710 (LoggedMeasurementConfiguration) and operation 725 (UEInformationResponse) may be enhanced as follows.

In operation 710, the base station may indicate the UE to additionally perform measurement and logging of beam-related information when the UE performs measurement and logging in an RRC_IDLE or RRC_INACTIVE state. To this end, at least some of the following pieces of information may be newly defined and included in the LoggedMeasurementConfiguration message.
- **BeamMeasurementIndicator:** A 1-bit indicator may be defined to indicate the UE to measure and log beam-related information when performing measurement and logging in the RRC_IDLE or RRC_INACTIVE state. When data acquisition for beam-prediction-model training is required, the base station may include the 1-bit indicator in the LoggedMeasurementConfiguration message so as to indicate the UE to perform beam measurement and logging in the RRC_IDLE or RRC_INACTIVE state. When the 1-bit indicator is included (i.e., configured) in the LoggedMeasurementConfiguration message, the UE may perform beam measurement and logging in the RRC_IDLE or RRC_INACTIVE state, and, as in operation 125, the UE may report, to the base station, multiple SSB indices and the corresponding measurement results for each of the serving cell and the neighbor cell.
- **reportQuantity:** The base station may indicate the UE which values to log as beam-measurement results when the UE performs beam measurement and logging operation in the RRC_IDLE or RRC_INACTIVE state. To this end, new information (e.g., reportQuantity) may be defined to indicate at least one combination among RSRP, RSRQ, and SINR. When data acquisition for beam prediction model training is required, the base station may indicate the UE to perform beam measurement and logging in the RRC_IDLE or RRC_INACTIVE state. In this case, by including the reportQuantity information in the LoggedMeasurementConfiguration message and configuring its value appropriately, the base station may indicate the types of measurement-result values that the UE should log as beam-measurement results. Based on the reportQuantity information included in the LoggedMeasurementConfiguration message, the UE may log the measurement-result values requested by the base station after performing beam measurement in the RRC_IDLE or RRC_INACTIVE state.
- **reportAll indicator:** The base station may indicate the UE to perform measurement and logging for all beams (that is, all SSB indexes) transmitted by the serving cell and neighbor cell when the UE performs beam measurement and logging operation in the RRC_IDLE or RRC_INACTIVE state. To this end, a new indicator (for example, reportAll) may be introduced. In case that the reportAll indicator in the loggedMeasurementConfiguration message (710) received from the base station is configured as "True", the UE may perform measurements for all beams (in other words, all SSB indices) transmitted by the serving cell and the neighbor cell, and may log the resulting measurement values.
- **indexesToReportList:** The base station may indicate the UE, when performing beam measurement and logging operation in the RRC_IDLE or RRC_INACTIVE state, to report measurement results for only some of the beams (that is, some of the SSB indexes) transmitted by the serving cell and neighboring cells. To this end, a new field (e.g., indexesToReportList) may be introduced. When the indexesToReportList is configured in the LoggedMeasurementConfiguration message (710) received from the base station, the UE may perform measurement for all SSBs indicated through the indexesToReportList and may log the resulting measurement values.
- **L1 measurement indication:** In case that, for training a beam-prediction model, reporting of L1 measurement results (e.g., L1 RSRP/RSRQ/SINR) rather than L3 measurement results filtered in the time domain is required, the base station may include, in the LoggedMeasurementConfiguration message, a 1-bit indicator for indicating the UE to report L1 measurement results. When the base station indicates L1 measurement-result reporting through the 1-bit indicator, the UE may log L1 measurement results instead of L3 measurement results after performing beam measurement (or may additionally log L1 measurement results together with L3 measurement results).
- **maxNrofIndexesToReport:** This indicates the maximum number of SSB indexes for which the UE may report results when reporting beam-measurement results. The base station may indicate, for each cell, the maximum number of SSB indexes whose results the UE may report when performing beam-measurement and logging operations in the RRC_IDLE or RRC_INACTIVE state. To this end, a new field (e.g., maxNrofIndexesToReport) may be introduced. When maxNrofIndexesToReport is configured in the LoggedMeasurementConfiguration message (710) received from the base station, the UE may log the results for SSB indexes, for each cell, as many as the number indicated by maxNroflndexesToReport.

In operation 725, when the loggedMeasurementConfiguration message received from the base station in operation 710 includes configuration information for beam-related measurement and logging, the UE may report to the base station, through a UEInformationResponse message (725), the results of beam-related measurement and logging performed according to the indication of the base station. To this end, the logMeasReport information included in the UEInformationResponse message (725) may include multiple pieces of beam measurement information for the serving cell and neighboring cells. More specifically, in the measurement-result information 733 for the serving cell included in the logMeasReport, a resultsSSB-measList may be newly defined to include beam-measurement results for multiple SSB indexes transmitted by the serving cell. The UE may include, in the resultsSSB-measList, multiple measured SSB indexes and the corresponding measurement results (ssb-Results) according to the beam-related measurement configuration (or indication) provided by the base station in operation 710. In addition, in the measurement-result information 735 for neighboring cells included in the logMeasReport, a resultsSSB-measList may be newly defined to include beam-measurement results for multiple SSB indexes transmitted by each neighboring cell. The UE may include, in the resultsSSB-measList, multiple measured SSB indexes for each neighboring cell and the corresponding measurement results (ssb-Results) according to the beam-related measurement configuration (or indication) provided by the base station in operation 710.

A UE capability information parameter may be newly defined in relation to the enhanced operation according to an embodiment of the disclosure. The new UE capability parameter may indicate whether the UE is able to understand the new configuration information (e.g., BeamMeasurementIndicator, reportQuantity, reportAll indicator, indexesToReportList, L1 measurement Indication, maxNrofIndexesToReport) included in operation 710, and whether the UE is able to perform operations indicated according to the configuration. A separate UE capability information parameter may be defined for each configuration information and a corresponding operation, or a UE capability information parameter may be defined for each combination of one or more configurations and operations. The base station and the UE may exchange UE capability information in a process prior to the above signaling procedure.

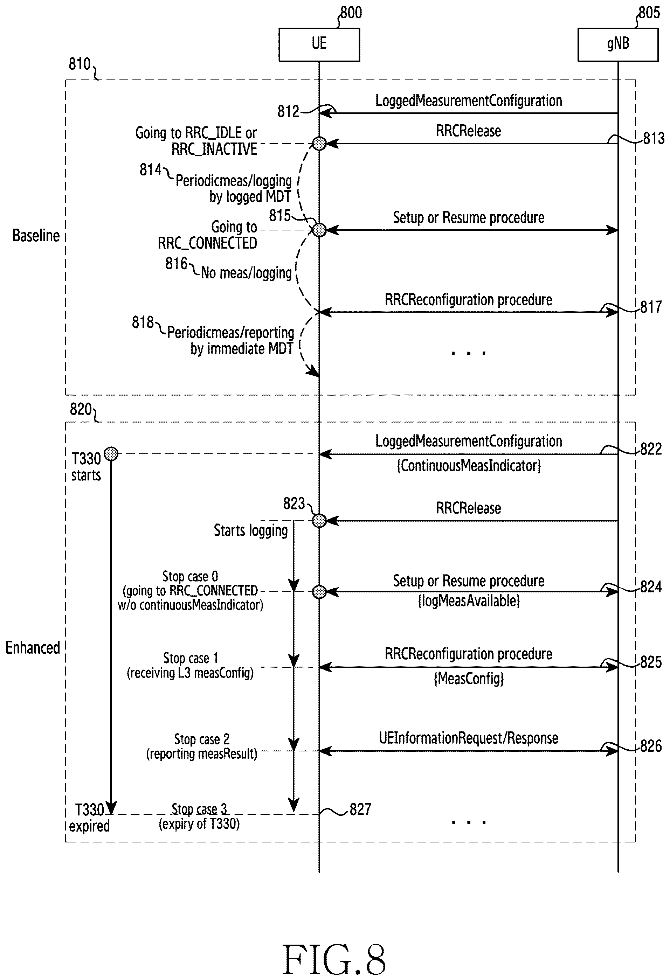

FIG. 8 is a flowchart illustrating a process in which, in order to train a model that predicts beam information in a time domain, a base station indicates a UE to perform continuous beam measurements after the UE has transitioned from an RRC_IDLE/RRC _INACTIVE state to an RRC_CONNECTED state, according to an embodiment of the disclosure.

Referring to FIG. 8, in order to train a model that predicts beam information in the time domain, the base station may configure the UE to continuously perform measurement for a cell and a beam in the time domain regardless of the state of the UE when the UE is in an RRC_IDLE/RRC_INACTIVE state or an RRC_CONNECTED state. Thereafter, the base station may receive reports of the results s continuously measured by the UE in the time domain. The basic signaling procedure and operation 810 for this may be described as follows.

In operation 812, the base station may transmit a LoggedMeasurementConfiguration message (812) to the UE so as to indicate the UE to perform measurements of cells and beams and to log the result values when the UE subsequently transitions to the RRC_IDLE or RRC_INACTIVE state. The configuration information of the the LoggedMeasurementConfiguration message is as described with respect to operation 710 of the embodiment of FIG. 7.

In operation 813, the base station may transition the UE from the RRC_CONNECTED state to the RRC_IDLE or RRC_INACTIVE state by transmitting an RRCRelease message to the UE. In this case, the UE may start the measurement and logging operation according to the base station configuration described in operation 812 while transitioning to the RRC_IDLE or RRC_INACTIVE state.

In section 814, the UE may perform measurement and logging operations at regular intervals (loggingInterval) according to the base station configuration described in operation 812. A more specific description of the UE measurement and logging operation is the same as the description of operation 715 of the embodiment of FIG. 7, and thus will be omitted.

In operation 815, the UE may transition back to the RRC_CONNECTED state through an RRC setup or RRC resume procedure. In this case, the UE may stop the measurement and logging operation performed in the RRC_IDLE or RRC_INACTIVE state according to the LoggedMeasurementConfiguration configured in operation 812.

In section 816, the UE may no longer perform beam measurement and logging operations that were performed in the RRC_IDLE or RRC_INACTIVE state. Accordingly, beam-related measurement information that has been periodically logged in the time domain may not be collected during this section. This implies that there is a limitation for the base station to obtain data required for training the time-domain beam prediction model (that is, continuous beam-measurement information in the time domain).

In operation 817, the base station may indicate the UE, through the RRCReconfiguration procedure, to measure and receive result reporting with regard to a specific frequency, cell, and beams. More specifically, the base station may provide, to the UE through an RRCReconfiguration message, an indication of a frequency, a cell, and beams for measurement (that is, an SSB or CSI-RS transmitted by using a specific beam). The description of specific configuration information included in the RRCReconfiguration message is omitted here because it is identical to that described with respect to operation 621 of the embodiment of FIG. 6.

In section 818, the UE may perform cell and beam measurement in the RRC_CONNECTED state according to the base station configuration described in operation 817, and then report the measurement result to the base station through a measurementReport.

According to the basic signaling procedure and operation described above, the UE may perform beam measurement and logging operations during section 814 in the RRC_INACTIVE and RRC_IDLE states, based on the configuration included in the LoggedMeasurementConfiguration message received in operation 812. In addition, the UE may perform beam measurement and reporting operations during section 818 in the RRC_CONNECTED state, based on the configuration included in the RRCReconfiguration message received in operation 817. However, during section 816, which corresponds to the period that begins at time point 815 when the UE transitions from the RRC_INACTIVE/RRC_IDLE state to the RRC_CONNECTED state and ends when the UE receives, through the RRCReconfiguration procedure in operation 817, the beam-measurement configuration information for the RRC_CONNECTED state, the UE may stop performing beam-measurement and logging operations. This indicates that there exists a gap in which the UE does not perform beam measurements in the time domain, or that it may be difficult for the base station to acquire from the UE the data required for training a time-domain beam-prediction model (that is, continuous beam-measurement information in the time domain). To address this issue, an enhanced signaling procedure and operation 820 is proposed as follows.

In operation 822, the base station may transmit a LoggedMeasurementConfiguration message (822) to the UE so as to indicate the UE to perform measurements on a cell and a beam and log the result values when the UE subsequently transitions to an RRC_IDLE or RRC_INACTIVE state. In this case, a new indicator (for example, ContinousMeasIndicator) may be defined to indicate the UE to continue performing the beam-measurement and logging operations that were being performed in the RRC_IDLE/RRC_INACTIVE state for a predetermined period even after the UE has transitioned to the RRC_CONNECTED state. When continuous beam-measurement information in the time domain is required for training a beam-prediction model in a time domain, the base station may configure the value of the indicator (ContinuousMeasIndicator) as "true" in the LoggedMeasurementConfiguration message. When the value of the indicator (ContinuousMeasIndicator) is configured as "true" in the LoggedMeasurementConfiguration message, the UE may continue performing the beam-measurement and logging operations that were being carried out in the RRC_IDLE/RRC_INACTIVE state even after transitioning to the RRC_CONNECTED state, as in operation 124 below. In addition, upon receiving the LoggedMeasurementConfiguration message, the UE may configure the T330 timer to the logging duration and start the timer.

In operation 823, the base station may transition the UE from an RRC_CONNECTED state to an RRC_IDLE or RRC_INACTIVE state by transmitting an RRCRelease message to the UE. In this case, upon transitioning to the RRC_IDLE or RRC_INACTIVE state, the UE may start measurement and logging operations according to the base station configuration described in operation 822.

In operation 824, the UE may transition back to the RRC_CONNECTED state through an RRC setup or RRC resume procedure. In this case, depending on the configuration included in the LoggedMeasurementConfiguration received in operation 822, the UE may continue or stop the beam-measurement and logging operations after transitioning to the RRC_CONNECTED state. When, in the LoggedMeasurementConfiguration received in operation 822, the value of a new indicator (for example, ContinousMeasIndicator) for indicating the UE to continue the beam-measurement and logging operations performed in the RRC_IDLE/RRC_INACTIVE state for a predetermined period even after transitioning to the RRC_CONNECTED state is configured to "True", the UE may continue the beam-measurement and logging operations after transitioning to the RRC_CONNECTED state. However, upon transitioning to the RRC_CONNECTED state, the UE may additionally determine whether the following conditions are satisfied, and may continue the beam-measurement and logging operations only when all of the conditions are satisfied.
- **Condition 1:** The RPLMN should be included in the plmn-IdentityList. For reference, here, the plmn-IdentityList is a value that is configured in the LoggedMeasurementConfiguration message (822) and then stored in the UE-internal VarLogMeasReport information, as described in operation 710 of the embodiment of FIG. 7.
- **Condition 2:** When areaConfiguration is configured in the LoggedMeasurementConfiguration message (822), the current primary cell or serving cell of the UE should belong to an area indicated by the areaConfiguration. On the other hand, when the areaConfiguration is not configured, Condition 2 is satisfied. For reference, here, the areaConfiguration is also a value configured in the LoggedMeasurementConfiguration message (822) and then stored in the UE-internal VarLogMeasReport information, as described in operation 710 of the embodiment of FIG. 7.

When the new indicator (for example, ContinousMeasIndicator) is not included in the LoggedMeasurementConfiguration received by the UE in operation 822 (or is included but configured as "False"), the UE may stop the beam-measurement and logging operations that were performed in the RRC_IDLE/RRC_INACTIVE state.

When, even after transitioning to the RRC_CONNECTED state in operation 824, the UE continues performing the beam-measurement and logging operations that were performed in the RRC_IDLE/RRC_INACTIVE, the UE may stop the beam-measurement and logging operations in the following cases.
- **Case 1** (**operation 825):** When the base station provides the beam-measurement and reporting configuration for the RRC_CONNECTED state (for example, MeasConfig) to the UE through an RRCReconfiguration procedure, the UE may stop the beam-measurement and logging operations that were performed based on the configuration of the LoggedMeasurementConfiguration message (822). Thereafter, the UE may perform beam-measurement and reporting operations in the RRC_CONNECTED state according to the MeasConfig configuration included in the RRCReconfiguration message. In addition, the UE may stop the T330 timer and release all configuration information of the LoggedMeasurementConfiguration message. Furthermore, after a predetermined time (for example, 24 hours) has elapsed from the corresponding time point, the UE may delete the measurement results that have been logged.
- **Case 2** (**operation 826):** When the base station requests, through a UEInformationRequest message, the reporting of the measurement information logged by the UE in the RRC_IDLE/RRC_INACTIVE state, and the UE reports the requested information through a UEInformationResponse message, the UE may stop the beam-measurement and logging operations that were performed based on the configuration of the LoggedMeasurementConfiguration message (822). In addition, the UE may stop the T330 timer and release all configuration information of the LoggedMeasurementConfiguration message. Furthermore, after a predetermined time (for example, 24 hours) has elapsed from the corresponding time point, the UE may delete the measurement results that have been logged.
- **Case 3** (**operation 827):** When the T330 timer expires, the UE may stop the beam-measurement and logging operations that were performed based on the configuration of the LoggedMeasurementConfiguration message (822). In addition, the UE may release all configuration information of the LoggedMeasurementConfiguration message. Furthermore, after a predetermined time (for example, 24 hours) has elapsed from the time point at which the T330 timer expires, the UE may delete the measurement results that have been logged.

In addition, with respect to the enhanced operation, a new UE capability information parameter may be defined. The new UE capability parameter may indicate whether the UE is able to understand the new configuration information (for example, ContinousMeasIndicator) included in operation 822 and perform the corresponding operations according to such configuration. A separate UE capability information parameter may be defined for each piece of configuration information and its corresponding operation, and a UE capability information parameter may be defined for each combination of one or more configurations and operations. The process in which the base station and the UE exchange UE capability information may be performed prior to the above-described signaling procedures.

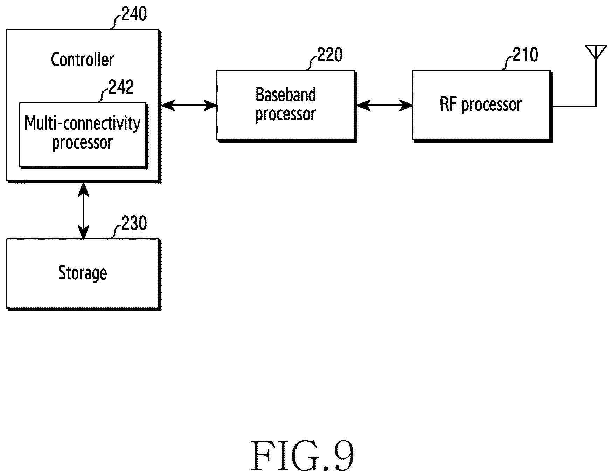

FIG. 9 illustrates a UE device according to an embodiment of the disclosure.

Referring to FIG. 9, the UE may include a radio frequency (RF) processor 910, a baseband processor 920, a storage 930, and a controller 940. The structure of the UE is not limited to the exemplary structure illustrated in FIG. 9, and the UE may include a larger or smaller number of components than those illustrated in FIG. 9.

The RF processor 910 may perform functions for transmitting and receiving a signal via a wireless channel, such as band conversion and amplification of the signal. For example, the RF processor 910 may up-convert a baseband signal provided from the baseband processor 920 to an RF band signal and then transmit the same through an antenna, and may down-convert an RF band signal received through the antenna to a baseband signal. For example, the RF processor 910 may include, but not limited to, a transmission filter, a reception filter, an amplifier, a mixer, an oscillator, a digital-to-analog converter (DAC), an analog-to-digital converter (ADC), and the like. Although only one antenna is illustrated in FIG. 9, the UE may include multiple antennas. In addition, the RF processor 910 may include multiple RF chains. Furthermore, the RF processor 910 may perform beamforming. For the beamforming, the RF processor 910 may adjust the phase and magnitude of each of signals transmitted and received through multiple antennas or antenna elements. In addition, the RF processor 910 may perform MIMO, and may receive multiple layers when performing MIMO operations.

The baseband processor 920 may perform functions of conversion between baseband signals and bitstrings according to the system's physical layer specifications. For example, during data transmission, the baseband processor 920 may encode and modulate a transmitted bitstring to generate complex symbols. In addition, during data reception, the baseband processor 920 may demodulate and decode a baseband signal provided from the RF processor 910 to restore a received bitstring. For example, when following the orthogonal frequency division multiplexing (OFDM) scheme, during data transmission, the baseband processor 920 may encode and modulate a transmitted bitstring to generate complex symbols, may map the complex symbols to subcarriers, and may configure OFDM symbols through an inverse fast Fourier transform (IFFT) operation and cyclic prefix (CP) insertion. In addition, during data reception, the baseband processor 920 may split a baseband signal provided from the RF processor 910 at the OFDM symbol level, may restore signals mapped to subcarriers through a fast Fourier transform (FFT) operation, and may restore a received bitstring through demodulation and decoding.

The baseband processor 920 and the RF processor 910 may transmit and receive signals as described above. Therefore, the baseband processor 920 and the RF processor 910 may be referred to as a transmitter, a receiver, a transceiver, or a communication unit. Furthermore, at least one of the baseband processor 920 and the RF processor 910 may include multiple communication modules to support multiple different radio access technologies. In addition, at least one of the baseband processor 920 and the RF processor 910 may include different communication modules to process signals in different frequency bands. For example, the different radio access technologies may include a wireless LAN (e.g., IEEE 802.11), a cellular network (e.g., LTE), and the like. In addition, the different frequency bands may include super high frequency (SHF) (e.g., 2 NRHz) bands and millimeter wave (mmWave) (e.g., 60GHz) bands. The UE may transmit/receive a signal with the base station by using the baseband processor 920 and the RF processor 910, and the signal may include control information and data.

The storage 930 may store basic programs, application programs, and data, such as configuration information, for operation of the main base station. For example, the storage 930 may store basic programs, application programs, and data information, such as configuration information, for the operation of the UE. In addition, the storage unit 930 may provide the stored data at the request of the controller 940.

The storage 930 may include storage media such as a ROM, a RAM, a hard disk, a CD-ROM, and a DVD, or a combination of storage media. In addition, the storage 930 may be configured by multiple memories. According to an embodiment of the disclosure, the storage 930 may store programs for performing the handover method according to the disclosure.

The controller 940 may control the overall operation of the UE. For example, the controller 940 may transmit/receive signals through the baseband processor 920 and the RF processor 910.

In addition, the controller 940 records data in the storage 930 and reads the data from the storage 930. To this end, the controller 940 may include at least one processor. For example, the controller 940 may include a communication processor (CP) configured to perform control for communication, and an application processor (AP) configured to control upper layers such as application programs. In addition, according to an embodiment of the disclosure, the controller 940 may include a multi-connectivity processor 942 configured to process processes operating in a multi-connectivity mode. In addition, at least one component in the UE may be implemented as a single chip.

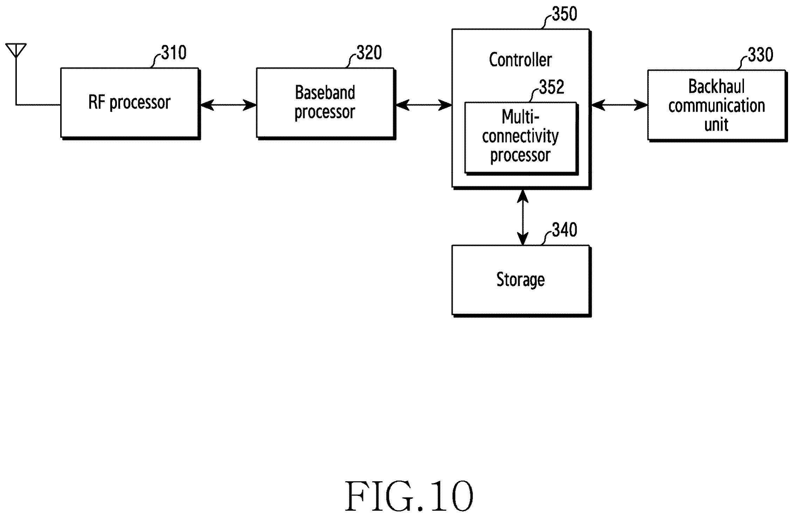

FIG. 10 illustrates a base station device according to an embodiment of the disclosure.

The base station in FIG. 10 may be included in the above-described network.

As illustrated in FIG. 10, the base station may include an RF processor 1010, a baseband processor 1020, a backhaul communication unit 1030, a storage 1040, and a controller 1050. The structure of the base station is not limited to the exemplary structure illustrated in FIG. 10, and the structure of the base station may include a larger or smaller number of components than those of the structure illustrated in FIG. 10. The RF processor 1010 may perform functions for transmitting and receiving a signal via a wireless channel, such as band conversion and amplification of the signal. For example, the RF processor 1010 may up-convert a baseband signal provided from the baseband processor 1020 to an RF band signal and then transmit the same through an antenna, and may down-convert an RF band signal received through the antenna to a baseband signal. For example, the RF processor 1010 may include a transmission filter, a reception filter, an amplifier, a mixer, an oscillator, a DAC, and an ADC. Although only one antenna is illustrated in FIG. 10, the RF processing unit 1010 may include multiple antennas. In addition, the RF processor 1010 may include multiple RF chains. Furthermore, the RF processor 1010 may perform beamforming. For the beamforming, the RF processor 1010 may adjust the phase and magnitude of each of signals transmitted and received through multiple antennas or antenna elements. The RF processor 1010 may transmit one or more layers to perform a downward MIMO operation.

The baseband processor 1020 may perform functions of conversion between baseband signals and bitstrings according to the system's physical layer specifications. For example, during data transmission, the baseband processor 1020 may encode and modulate a transmitted bitstring to generate complex symbols. In addition, during data reception, the baseband processor 1020 may demodulate and decode a baseband signal provided from the RF processor 1010 to restore a received bitstring. For example, when following the OFDM scheme, during data transmission, the baseband processor 1020 may encode and modulate a transmitted bitstring to generate complex symbols, may map the complex symbols to subcarriers, and may configure OFDM symbols through an IFFT operation and CP insertion. In addition, during data reception, the baseband processor 1020 may split a baseband signal provided from the RF processor 1010 at the OFDM symbol level, may restore signals mapped to subcarriers through FFT operation, and may restore a received bitstring through demodulation and decoding. The baseband processor 1020 and the RF processor 1010 may transmit and receive signals as described above. Therefore, the baseband processor 1020 and the RF processor 1010 may be referred to as a transmitter, a receiver, a transceiver, a communication unit, or a wireless communication unit. The base station may transmit/receive a signal with the UE by using the baseband processor 1020 and the RF processor 1010, and the signal may include control information and data.

The backhaul communication unit 1030 may provide an interface for communicating with other nodes in the network. For example, the backhaul communication unit 1030 may convert bitstrings transmitted from the main base station to other nodes, for example, an auxiliary base station or a core network, to physical signals, and may convert physical signals received from the other nodes to bitstrings.

The storage 1040 may store basic programs, application programs, and data, such as configuration information, for operation of the main base station. For example, the storage 1040 may store information regarding a bearer allocated to a connected UE, a measurement result reported from the connected UE, and the like. In addition, the storage 1040 may store information serving as a criterion to determine whether to provide multi-connectivity to a UE or to suspend the same. In addition, the storage 1040 may provide the stored data at the request of the controller 1050. The storage 1040 may include storage media such as a ROM, a RAM, a hard disk, a CD-ROM, and a DVD, or a combination of storage media. In addition, the storage 1040 may be configured by multiple memories. According to an embodiment of the disclosure, the storage 1040 may store programs for performing the handover method according to the disclosure.

The controller 1050 may control the overall operation of the main base station. For example, the controller 1050 may transmit/receive signals through the baseband processor 1020 and the RF processor 1010 or through the backhaul communication unit 1030. In addition, the controller 1050 records data in the storage 1040 and reads the data from the storage 1030. To this end, the controller 1050 may include at least one processor. In addition, according to an embodiment of the disclosure, the controller 1050 may include a multi-connectivity processor 1052 configured to process processes operating in a multi-connectivity mode.

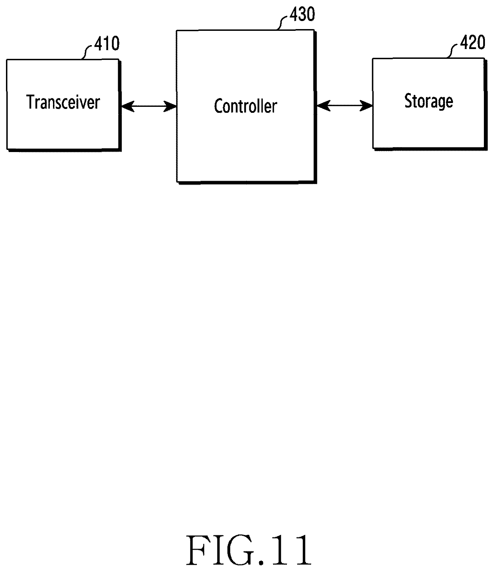

FIG. 11 is a block diagram illustrating an example of a structure of a UE according to an embodiment of the disclosure.

As illustrated in FIG. 11, the UE of the disclosure may include a controller (control unit) 1130, a transceiver 1110, and a storage (memory) 1120. However, components of the UE are not limited to the above-described example. For example, the UE may include a larger or smaller number of components than the above-described components. In addition, the controller 1130, the transceiver 1110, and the storage 1120 may be implemented in the form of a single chip. According to an embodiment, the transceiver 1110 of FIG. 11 may include a transmitter and a receiver. Also, the controller 1130 of FIG. 11 may include at least one processor or controller.

According to an embodiment, the controller 1130 may control a series of processes such that the UE can operate according to the above-described embodiments of the disclosure. For example, according to an embodiment of the disclosure, the controller 1130 may control the components of the UE to perform transmission and reception methods of the UE according to whether the base station mode is a base station power saving mode or a base station normal mode. The controller 1130 may include one or multiple controllers, and the controller 1130 may execute programs stored in the storage 1120 to perform transmission and reception operations of the UE in a wireless communication system employing the above-described carrier aggregation of the disclosure.

The transceiver 1110 may transmit/receive signals with base stations. The signals transmitted/received with base stations may include control information and data. The transceiver 1110 may include an RF transmitter configured to up-convert and amplify the frequency of transmitted signals, an RF receiver configured to low-noise-amplify received signals and down-convert the frequency thereof, and the like. However, this is only an embodiment of the transceiver 1110, and the components of the transceiver 1110 are not limited to the RF transmitter and the RF receiver. In addition, the transceiver 1110 may receive signals through a radio channel, output the same to the controller 1130, and transmit signals output from the controller 1130 through the radio channel.

According to an embodiment, the storage 1120 may store programs and data necessary for operations of the UE. In addition, the storage 1120 may store control information or data included in signals transmitted/received by the UE. The storage 1120 may include storage media such as a ROM, a RAM, a hard disk, a CD-ROM, and a DVD, or a combination of storage media. In addition, the storage 1120 may include multiple storages. According to an embodiment, the storage 1120 may store programs for performing transmission and reception operations of the UE according to whether the base station mode in the above-described embodiments of the disclosure is a base station power saving mode or a base station normal mode.

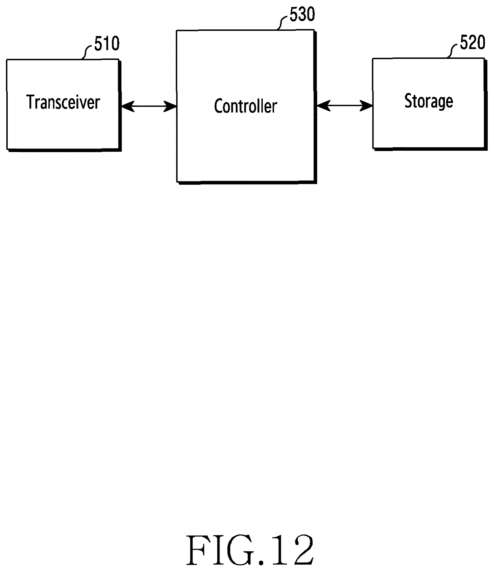

FIG. 12 is a block diagram illustrating an example of a structure of a base station according to an embodiment of the disclosure.

As illustrated in FIG. 12, the base station of the disclosure may include a controller (control unit) 1230, a transceiver 1210, and a storage (memory) 1220. However, components of the base station are not limited to the above- described example. For example, the base station may include a larger or smaller number of components than the above-described components. In addition, the controller 1230, the transceiver 1210, and the storage 1220 may be implemented in the form of a single chip. The controller 1230 of FIG. 12 may include at least one processor or controller.

The controller 1230 may control a series of processes so that the base station can operate according to the above-described embodiments of the disclosure. For example, according to an embodiment of the disclosure, the controller 1230 may control the components of the base station to perform UE scheduling methods according to whether the base station mode is a base station power saving mode or a base station normal mode. The controller 630 may include one or multiple controllers, and the controller 1230 may execute programs stored in the storage 1220 to perform UE scheduling methods according to whether the above-described base station mode is a base station power saving mode or a base station normal mode.

The transceiver 1210 may transmit/receive signals with UEs. The signals transmitted/received with UEs may include control information and data. The transceiver 1210 may include an RF transmitter configured to up-convert and amplify the frequency of transmitted signals, an RF receiver configured to low-noise-amplify received signals and down-convert the frequency thereof, and the like. However, this is only an embodiment of the transceiver 1210, and the components of the transceiver 1210 are not limited to the RF transmitter and the RF receiver. In addition, the transceiver 1210 may receive signals through a radio channel, output the same to the controller 1220, and transmit signals output from the controller 1220 through the radio channel.

According to an embodiment, the storage 1220 may store programs and data necessary for operations of the base station. In addition, the storage 1220 may store control information or data included in signals transmitted/received by the base station. The storage 1220 may include storage media such as a ROM, a RAM, a hard disk, a CD-ROM, and a DVD, or a combination of storage media. In addition, the storage 1220 may include multiple storages. According to an embodiment, the storage 1220 may store programs for performing UE scheduling methods according to whether the base station mode in the above-described embodiments of the disclosure is a base station power saving mode or a base station normal mode.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the disclosure, the term "computer program product" or "computer readable medium" is used to generally refer to a medium such as a memory, a hard disk installed in a hard disk drive, or a signal. The "computer program product" or "computer readable medium" is an element that is provided to a method for reporting UE capability in a wireless communication system according to the disclosure.

The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium. As an example, the "non-transitory storage medium" may include a buffer in which data is temporarily stored

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least a part of the computer program product (e.g., a downloadable app) may be temporarily generated or at least temporarily stored in the machine-readable storage medium, such as memory of the manufacturer's server, a server of the application store, or a relay server.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. In addition, the embodiments of the disclosure may also be applied to other communication systems and other variants based on the technical idea of the embodiments may also be implemented. For example, the embodiments may be applied to LTE, 5G, NR, or 6G systems. Therefore, the scope of the disclosure should not be defined as being limited to the embodiments set forth herein, but should be defined by the appended claims and equivalents thereof.

## Claims

1. A method performed by a terminal in a wireless communication system, the method comprising:
receiving, from a base station, configuration information related to beam prediction-based beam management;
based on the configuration information, performing measurements related to the beam prediction-based beam management at a plurality of measurement time points respectively; and
transmitting, to the base station, a measurement report including results of the measurements performed at the plurality of measurement time points respectively.

2. The method of claim 1, wherein the configuration information comprises at least one of information on a period at which the measurements are performed, information on a reporting interval of the measurement report, information for indicating the terminal to perform logging of the results of the measurements, information on a period at which the logging is performed, or information for indicating the terminal to report the results of the measurements as result values of layer 1 (L1) measurements.

3. The method of claim 2, wherein the information on the reporting interval is configured as a value equal to or smaller than the period at which the measurements are performed.

4. The method of claim 1, wherein each of the results of the measurements performed at the plurality of measurement time points respectively comprises a measurement result for all beams, and is used to train an artificial intelligence model for beam prediction.

5. A method performed by a base station in a wireless communication system,
the method comprising:
transmitting, to a terminal, configuration information related to beam prediction-based beam management; and
based on the configuration information, receiving, from the terminal, a measurement report including results of measurements related to the beam prediction-based beam management, the measurements being performed at a plurality of measurement time points respectively.

6. The method of claim 5, wherein the configuration information comprises at least one of information on a period at which the measurements are performed, information on a reporting interval of the measurement report, information for indicating the terminal to perform logging of the results of the measurements, information on a period at which the logging is performed, or information for indicating the terminal to report the results of the measurements as result values of layer 1 (L1) measurements.

7. The method of claim 6, wherein the information on the reporting interval is configured as a value equal to or smaller than the period at which the measurements are performed.

8. The method of claim 5, wherein each of the results of the measurements performed at the plurality of measurement time points respectively comprises a measurement result for all beams, and is used to train an artificial intelligence model for beam prediction.

9. A terminal in a wireless communication system, the terminal comprising:
a transceiver; and
a controller connected to the transceiver,
wherein the controller is configured to:
receive, from a base station, configuration information related to beam prediction-based beam management;
based on the configuration information, perform measurements related to the beam prediction-based beam management at a plurality of measurement time points respectively; and
transmit, to the base station, a measurement report including results of the measurements performed at the plurality of measurement time points respectively.

10. The terminal of claim 9, wherein the configuration information comprises at least one of information on a period at which the measurements are performed, information on a reporting interval of the measurement report, information for indicating the terminal to perform logging of the results of the measurements, information on a period at which the logging is performed, or information for indicating the terminal to report the results of the measurements as result values of layer 1 (L1) measurements.

11. The terminal of claim 10, wherein the information on the reporting interval is configured as a value equal to or smaller than the period at which the measurements are performed.

12. The terminal of claim 9, wherein each of the results of the measurements performed at the plurality of measurement time points respectively comprises a measurement result for all beams, and are used to train an artificial intelligence model for beam prediction.

13. A base station in a wireless communication system, the base station comprising:
a transceiver; and
a controller connected to the transceiver,
wherein the controller is configured to:
transmit, to a terminal, configuration information related to beam prediction-based beam management; and
based on the configuration information, receive, from the terminal, a measurement report including results of measurements related to the beam prediction-based beam management, the measurements being performed at a plurality of measurement time points respectively.

14. The base station of claim 13, wherein the configuration information comprises at least one of information on a period at which the measurements are performed, information on a reporting interval of the measurement report, information for indicating the terminal to perform logging of the results of the measurements, information on a period at which the logging is performed, or information for indicating the terminal to report the results of the measurements as result values of layer 1 (L1) measurements.

15. The base station of claim 14, wherein the information on the reporting interval is configured as a value equal to or smaller than the period at which the measurements are performed.
